# EUROPÄISCHE PATENTSCHRIFT

(11) **EP 2 271 517 B1**
(45) Veröffentlichungstag und Bekanntmachung des Hinweises auf die Patenterteilung: **02.11.2011**
(21) Anmeldenummer: 09734482.4
(22) Anmeldetag: 15.04.2009
(51) Int. Cl.: B60R 11/02, F16M 13/00

(54) **TAXAMETERSYSTEM**
TAXI METER SYSTEM
SYSTÈME DE TAXIMÈTRE

(30) Priorität: 22.04.2008 DE 202008005583 U
(43) Veröffentlichungstag der Anmeldung: 12.01.2011
(73) Patentinhaber: Kienzle Argo Taxi International GmbH, 12103 Berlin (DE)
(72) Erfinder: SCHMIDT, Joachim, 10587 Berlin (DE)
(74) Vertreter: Grünecker, Kinkeldey, Stockmair & Schwanhäusser
(86) Internationale Anmeldenummer: PCT/EP2009/002761
(87) Internationale Veröffentlichungsnummer: WO 2009/129957

(56) Entgegenhaltungen:
- DE-A1- 3 139 203
- US-A1- 2007 035 917
- US-B1- 6 464 185

## Beschreibung

Die vorliegende Erfindung betrifft ein Taxametersystem bestehend aus einer Taxameter-Aufnahmevorrichtung und einer Taxameter-Vorrichtung.

Taxameter wurden in der Vergangenheit überwiegend in sogenannten DIN-Schächten, wie beispielsweise vorgefertigten Radioschächten etc. verbaut. Auf diese Weise konnte ein sicherer Einbau gewährleistet werden, ohne die Konsole irreversibel zu verändern, was insbesondere unter dem Aspekt des Werterhalts des Fahrzeugs für den späteren zivilen Bereich als wichtig angesehen wurde.

Moderne Fahrzeuge verfügen zunehmend weniger über derartige vorbereitete Einbauplätze. Moderne Fahrzeugkonsolen verfügen statt über Einbauschächte über sogenannte Designblenden, sodass zumindest keine genormten herstellerübergreifenden typischen Einbauplätze mehr vorhanden sind.

Entsprechende Probleme ergeben sich somit daher auch beim nachträglichen Einbau von anderen Zusatzgeräten, wie beispielsweise Navigationsgeräten.

Zur Lösung dieses Problems werden auf dem Markt Aufnahmevorrichtungen für Zusatzgeräte, wie Taxameter und Navigationsgeräte, angeboten. Diese Aufnahmevorrichtungen sind typischerweise so ausgestaltet, dass sie an nahezu allen gängigen Konsoltypen ohne Verletzung der Konsole befestigbar sind, typischerweise indem die Aufnahmevorrichtung einen Rastvorsprung aufweist, der in einen Lüftungsschlitz eingebracht werden kann und dort mittels einer Rastnase eingerastet werden kann.

Obwohl es somit grundsätzlich Möglichkeiten gibt, Taxameter auch ohne vorhandene DIN-Schächte so an einer Fahrzeugkonsole zu befestigen, dass dadurch keine irreversible Verletzung der Konsole hingenommen werden muss, sind die vorhandenen Lösungen aus folgendem Grund nicht zufriedenstellend.

Auch wenn der Einbau mittels der genannten Aufnahmevorrichtungen gelingt, so muss das Taxameter letztendlich in zufälliger Weise an der Stelle montiert werden, an der eine Aufnahmevorrichtung an der Fahrzeugkonsole, beispiele an einem Lüftungsschlitz, befestigt werden kann. Dadurch kann es auftreten, dass das Taxameter nach Einbau wichtige Teile der Konsole überdeckt, wie beispielsweise Fahrzeuginstrumente. Auch kann es sein, dass das Taxameter dann an einer Stelle angebracht ist, an der die Ablesbarkeit der Anzeige aufgrund ungünstigen Lichteinfalls oder falscher Position zum Fahrer, sowohl für den Fahrer als auch für Fahrgäste, nicht optimal ist.

Der vorliegenden Erfindung liegt die Aufgabe zugrunde, ein Taxameter-System bestehend aus Taxameter-Vorrichtung und Taxameter-Aufnahmevorrichtung anzugeben, das diese Probleme beseitigt.

Diese Aufgabe wird durch den Gegenstand des Schutzanspruchs 1 gelöst.

Bevorzugte Ausgestaltungen sind Gegenstand der Unteransprüche.

Die vorliegende Erfindung baut auf der Erkenntnis auf, dass es von entscheidender Bedeutung ist, den Einbau, der gezwungenerweise an einer der wenigen möglichen Stellen erfolgen muss, derart flexibel zu gestalten, dass auch bei einer ungünstigen Platzierung dennoch eine akzeptable Ableseposition einstellbar ist. Dies wird entsprechend der vorliegenden Erfindung dadurch erzielt, dass die Taxameter-Vorrichtung auf mindestens zwei unterschiedliche Arten ausrichtbar ist, wobei dies zum einen dadurch erreicht werden kann, dass die Befestigung der Taxameter-Vorrichtung an der vorbefestigten Taxameter-Aufnahmevorrichtung auf zwei unterschiedliche Arten erfolgen kann, nämlich entsprechend einer horizontalen Ausrichtung oder einer vertikalen Ausrichtung. Zum anderen wird diese Aufgabe dadurch gelöst, dass nach Befestigung der Taxameter-Vorrichtung an der vorbefestigten Taxameter-Aufnahmevorrichtung die Taxameter-Vorrichtung noch schwenkbar verbleibt, um von einer vertikalen Ausrichtung in eine horizontale Ausrichtung verschwenkt werden zu können.

Entsprechend den zwei möglichen Variante ist ein Steuermodul in der Taxameter-Vorrichtung vorgesehen, durch das eine in der Taxameter-Vorrichtung vorhandene Bildschirmanzeige in zwei verschiedene Darstellungsarten umgeschaltet werden kann. Im Wesentlichen ist vorgesehen, dass eine Verschwenkung des Bildes um 90° erfolgen kann, um dadurch auf die letztendliche Ausrichtung in vertikaler oder horizontaler Weise zu reagieren, um letztendlich für den Betrachter ein korrekt einsehbares Bild darzustellen. Bei der Variante, bei der die Taxameter-Vorrichtung in zwei unterschiedlichen Positionen an der Taxameter-Aufnahmevorrichtung befestigbar ist, ist das Steuermodul vorzugsweise so ausgelegt, dass die Umschaltung der Darstellungsart beim Einbau der Taxameter-Vorrichtung einmalig entsprechend dem horizontalen oder vertikalen Einbau vorgenommenen wird. Bei der Variante, bei der die Taxameter-Vorrichtung nach Einbau noch in die vertikale oder horizontale Position umgeschwenkt werden kann, ist vorzugsweise zusätzlich eine Sensoreinrichtung in der Taxameter-Vorrichtung vorgesehen, die die Verschwenkung detektiert und dabei automatisch das Bild in die geeignete Darstellungsart umschaltet, sodass es vom Betrachter nach finaler Ausrichtung korrekt abgelesen werden kann.

Gemäß einem weiteren Aspekt der vorliegenden Erfindung ist darüber hinaus vorgesehen, die Taxameter-Vorrichtung in einen Aschenbecherschacht einzubauen. Dieser Idee liegt die Erkenntnis zugrunde, dass trotz fehlender Radioschächte die meisten Fahrzeuge nach wie vor über Aschenbecherschächte verfügen, die wiederum im Taxibetrieb ungenutzt bleiben. Ein derartiger ungenutzter Aschenbecherschacht ist somit der ideale Einbauschacht für ein Taxameter. Alternativ kann es sich hierbei auch um andere verfügbare Schächte handeln, wie beispielsweise ein Ablegefach oder ein Brillenfach. Dieser Aspekt der Erfindung baut weiterhin auf der Erkenntnis auf, dass es aufgrund der wenigen zur Verfügung stehenden Schächte schwierig ist, den einer Taxameter-Vorrichtung zugeordneten Drucker ebenfalls in der Konsole unterzubringen. Gemäß diesem weiteren Aspekt der vorliegenden Erfindung ist daher vorgesehen, die Druckervorrichtung des Taxameters in dem gleichen Schacht wie das Taxameter unterzubringen und Vorrichtungen vorzusehen, die erlauben, dass das Taxameter von einer ersten Betriebsposition in eine zweite Inspektionsposition gebracht wird, in der der hinter der Taxameter-Vorrichtung liegende Drucker mit Druckrolle zum Vorschein kommt, um Wartungsarbeiten, wie z. B. Rollenwechsel an dem Drucker, vornehmen zu können.

Bevorzugte Ausgestaltungen der vorliegenden Erfindung werden im Folgenden unter Bezugnahme auf die beiliegenden Zeichnungen näher erläutert. Dabei zeigen die Zeichnungen im Einzelnen:
- Fig. 1A und 1B: eine schematische Darstellung der Anzeige einer bevorzugten Ausführungsform der erfindungsgemäßen Taxameter-Vorrichtung,
- Fig. 2A und 2B: schematische perspektivische Ansichten einer bevorzugten Ausführungsform der erfindungsgemäßen Taxameter-Vorrichtung im eingebauten Zustand in einem Fahrzeug,
- Fig. 3A und 3B: schematische Darstellungen der Rückseite einer bevorzugten Ausführungsform einer erfindungsgemäßen Taxameter-Vorrichtung sowie schematisch dargestellter Teile einer Taxameter-Aufnahmevorrichtung und
- Fig. 4A und 4B: schematische Darstellungen einer weiteren bevorzugten Ausführungsform einer erfindungsgemäßen Taxameter-Vorrichtung, dargestellt in jeweils einer ersten und zweiten Betriebsposition.

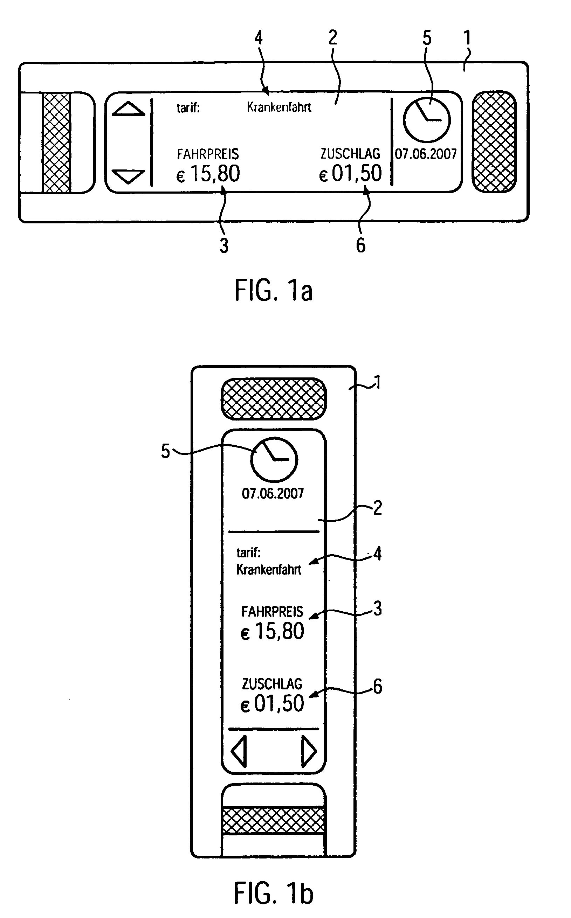

Entsprechend einem ersten Aspekt der vorliegenden Erfindung ist vorgesehen, ein Taxameter-System zu schaffen, bei dem es ermöglicht wird, eine Taxameter-Vorrichtung 1 in ihrer Ausrichtung sowohl horizontal entsprechend Fig. 1A als auch vertikal gemäß Fig. 1B einbauen zu können. Die Taxameter-Vorrichtung 1 gestattet somit, die notwendigen Fahrgastdaten auf einer Anzeige 2 entsprechend ihrem horizontalen oder vertikalen Aufbau auf zwei unterschiedliche Arten darzustellen, jeweils geeignet für den entsprechend gewählten Einbau. Beispiele für dargestellte Daten sind ein Fahrpreis 3, eine Tarifangabe 4, die Uhrzeit 5 sowie mögliche Zuschlagsinformationen 6.

Die vorliegende Erfindung baut auf der Erkenntnis auf, dass insbesondere bei modernen Fahrzeugen wenige oder keine typischen DIN-Schächte für den Einbau von Taxametern mehr vorhanden sind. Um Taxameter dennoch einbauen zu können, sind bereits Taxameter-Aufnahmevorrichtungen entwickelt worden, wie sie beispielsweise auch zur Aufnahme von Navigationsgeräten eingesetzt werden. Derartige Aufnahmevorrichtungen sind häufig so ausgelegt, dass sie eine Befestigung in Lüftungsschlitzen der Fahrzeugkonsole ermöglichen. Um zu vermeiden, dass dadurch entsprechend der Verteilung der Lüftungsschlitze nach dem Einbau eines Taxameters Bereiche der Konsole überdeckt werden, die eigentlich freizuhalten sind, sieht die Erfindung vor, dass der Einbau des Taxameters sowohl in horizontaler als auch vertikaler Ausrichtung erfolgen kann. Aufgrund dieser Wahlmöglichkeit kann der Benutzer somit entscheiden, ob ein horizontaler Einbau oder ein vertikaler Einbau zu weniger störenden Überdeckungen, von beispielsweise anderen in der Konsole vorhandenen Anzeigen, führt.

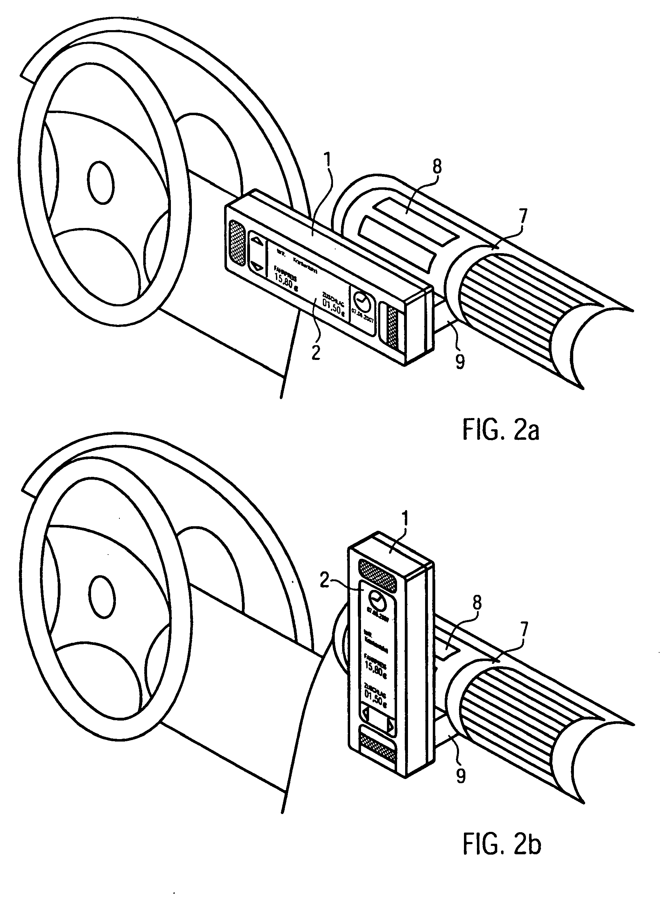

Fig. 2A zeigt hierzu in schematischer und perspektivischer Darstellung den Einbau einer bevorzugten Ausführungsform einer erfindungsgemäßen Taxameter-Vorrichtung 1 in einer Fahrzeugkonsole 7. Ersichtlicherweise ist gemäß der Darstellung in Fig. 2A die Taxameter-Vorrichtung 1 horizontal eingebaut, was mittels einer Taxameter-Aufnahmevorrichtung 9 gelingt, die mit der die Rückseite der Taxameter-Vorrichtung 1 an Lüftungsschlitzen 8 der Fahrzeugkonsole 7 befestigt wird.

Fig. 2B zeigt die andere Option, bei der die Taxameter-Vorrichtung 1 in vertikaler Weise an der Fahrzeugkonsole 7 mittels einer Taxameter-Aufnahmevorrichtung 9 an den Lüftungsschlitzen 8 der Fahrzeugkonsole befestigt ist. Ersichtlicherweise ist die Anzeige 2 der Taxameter-Vorrichtung beim Übergang von der horizontalen Einbauweise in die vertikale Einbauweise gemäß Fig. 2B derart umgeschaltet worden, dass stets ein richtiges Ablesen ermöglicht wird, d .h je nach Kulturkreis mit Zeilenverlauf von links nach rechts, von oben nach unten oder von rechts nach links.

Damit dies gelingt, weisen bevorzugte Ausführungsformen der erfindungsgemäßen Taxameter-Vorrichtung intern Steuermodule auf, die die Ansteuerung der Anzeige 2 entsprechend der Ausrichtung beim Einbauen der Taxameter-Vorrichtung richtig ansteuern. Gemäß einer ersten Variante ist dieses Steuermodul programmierbar und es wird diese Programmierung zum Zeitpunkt des Einbaus der Taxameter-Vorrichtung im Fahrzeug vom einbauenden Betrieb vorgenommen. Dies bedeutet, dass die Ausrichtung des Displays beim ursprünglichen Einbau einmalig richtig eingestellt wird und eine Umprogrammierung erst bei einer Änderung der Einbauausrichtung vorgenommen werden kann.

Diese Umprogrammierung beim Einbau weist den Vorteil auf, dass das Steuermodul sehr einfach ausgelegt sein kann und somit entsprechend kostengünstig produziert werden kann.

Gemäß einer anderen Ausführungsform weist die Taxameter-Aufnahmevorrichtung 9 oder das die Taxameter-Vorrichtung 1 selbst ein Drehgelenk (nicht dargestellt) auf, mittels dem die Taxameter-Vorrichtung 1 auch nach dem Einbau noch gedreht werden kann, um wahlweise in die horizontale oder vertikale Position verfahren werden zu können. Bei dieser Ausführungsform verbleibt somit maximale Flexibilität, an welchem Platz das Taxameter platziert wird und es muss nicht bereits beim Einbau eine feste Position vorgegeben werden. Entsprechend dieser Ausführungsform weist das Steuermodul in der Taxameter-Vorrichtung Einrichtungen auf, die gestatten, die gerade gewählte Ausrichtung zu erfassen. Die derartige Erfassungsvorrichtung kann aus einem Sensor bestehen, der automatisch die Vertikal- oder Horizontalstellung des Taxameters erfasst und ein entsprechendes Signal generiert, über das das Steuermodul zu einer korrekten Umschaltung der Anzeige 2 automatisch veranlasst wird. Alternativ können beim Drehen Kontakte geschlossen oder unterbrochen werden, sodass aufgrund dieser Schaltkreiskonfiguration die gerade gewählte Ausrichtung des Taxameters erkannt werden kann und die Umschaltung der Anzeigeeinrichtung 2 entsprechend richtig erfolgen kann.

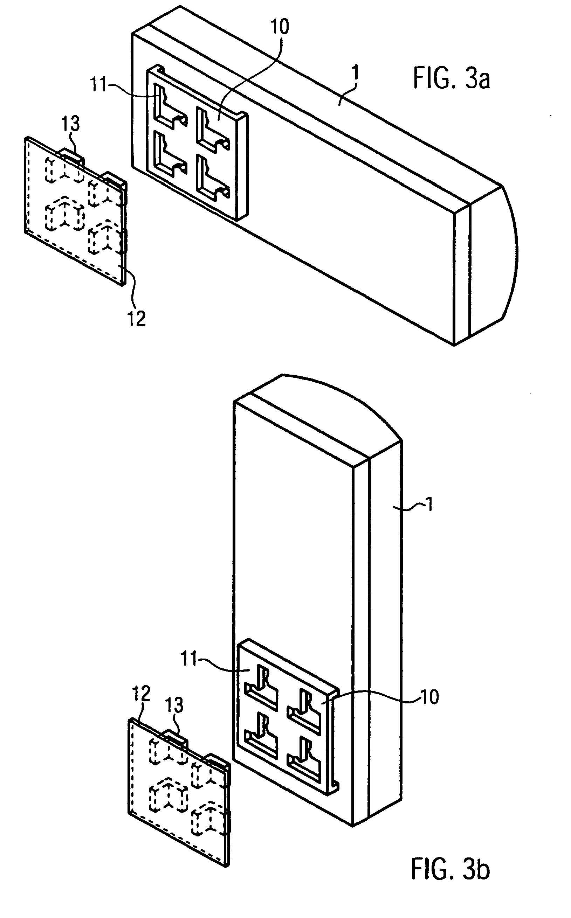

Die Fig. 3A und 3B zeigen schematische Rückansichten einer erfindungsgemäßen Ausführungsform der erfindungsgemäßen Taxameter-Vorrichtung. Die Taxameter-Vorrichtung 1 weist entsprechend auf ihrer Rückseite eine Aufnahmeplatte 10 mit Einrastöffnungen 11 auf. Ebenfalls angedeutet ist ein Teil der Taxameter-Aufnahmevorrichtung in Gestalt einer Platte 12 mit Rastnasen 13. Die Rastnasen 13 korrespondieren mit den Öffnungen 11 derart, dass sie an die Taxameter-Aufnahmevorrichtung angekoppelt werden können, wobei die Rastnasen in die Öffnungen 11 eingeschoben werden und anschließend eine Verschiebung erfolgt, um ein festes Einrasten zu gewähren. Die Öffnungen 11 sind im Bezug auf die Einrastnasen 13 so ausgestaltet, dass ein Befestigen entsprechend 3A in horizontaler Weise als auch entsprechend Fig. 3B in vertikaler Weise erfolgen kann.

Bei dieser bevorzugten Ausführungsform ist somit vorgesehen, dass eine Veränderung der Einbauposition erfolgen kann, jedoch über die Einbaugeometrie feste Positionen erreicht werden. Diese Variante ist insbesondere dazu vorgesehen, die Ausrichtung der Taxameter-Vorrichtung einmalig beim Einbau der Taxameter-Vorrichtung festzulegen und entsprechend das Steuermodul der Taxameter-Vorrichtung anfänglich so zu programmieren, dass die Anzeigeeinrichtung 2 eine korrekte Darstellung vornimmt.

Gemäß der oben diskutierten alternativen Ausführungsform, bei der ein Drehen der Taxameter-Vorrichtung noch nach dem Einbau möglich sein soll, ist alternativ zu Fig. 3A und 3B zusätzlich ein Drehgelenk vorhanden.

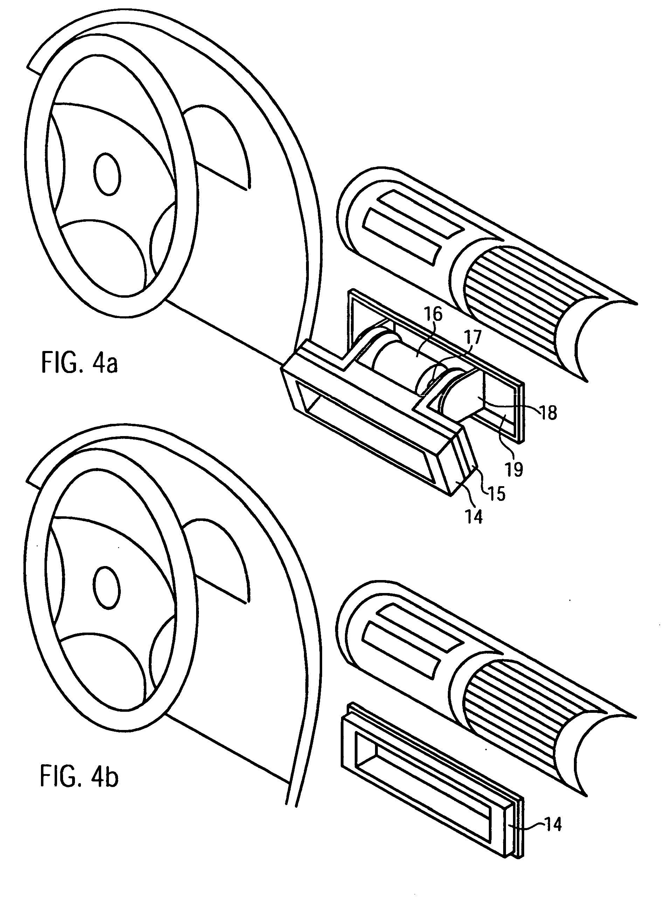

Gemäß einem weiteren Aspekt der vorliegenden Erfindung ist vorgesehen, eine Taxameter-Vorrichtung zu schaffen, die an ihrer Rückseite eine Aufnahmevorrichtung für eine Papierrolle aufweist. In Fig. 4A weist die Taxameter-Vorrichtung 14 einen Halterahmen 15 auf, in den eine Papierrolle 16 über eine Achse 17 drehbar eingebracht ist. Die Taxameter-Vorrichtung 14 ist mit ihrem Rahmen 15 wiederum in einer Aufnahmevorrichtung 18 gehalten, wobei diese Aufnahmevorrichtung 18 vorher in einen Schacht 19 einer nicht weiter dargestellten Fahrzeugkonsole eingebracht wurde. Die resultierende Konstruktion erlaubt es, die Taxameter-Vorrichtung 14 in eine Inspektionsposition, wie sie in Fig. 4A angedeutet ist, zu verfahren, in der ein Zugriff auf die Papierrolle 16 ermöglicht wird. Daneben kann eine Betriebsposition erreicht werden, in der die Taxameter-Vorrichtung 14 über eine nicht näher dargestellte Schwenkvorrichtung, die Teil der Aufnahmevorrichtung 18 ist, in den Schacht eingefahren wird, wodurch sich eine Situation ergibt, die schematisch in Fig. 4B dargestellt ist. In der Position gemäß Fig. 4B ist das Taxameter vollständig in den in einer Fahrzeugkonsole vorgesehenen Schacht eingefahren. Die Taxameter-Vorrichtung 14 verfügt intern über entsprechende Module, die eine Ansteuerung eines nicht näher dargestellten Druckers ermöglichen, durch den die Papierrolle 16 beschrieben wird. Die entsprechend resultierende Kombination Taxameter-Vorrichtung, Drucker, Papierrolle als eine Einheit birgt den Vorteil, dass diese Einheit insgesamt in einem einzigen Schacht in der Fahrzeugkonsole untergebracht werden kann. Aufgrund der vorgesehenen Schwenkeinrichtung ist ein Verschwenken dieser Einheit aus einer eingefahrenen Position in eine ausgefahrene Position möglich. Insgesamt ergibt sich der Vorteil, dass der Drucker samt Papierrolle in dem gleichen Schacht untergebracht werden kann und im normalen Betrieb gemäß Fig. 4B noch nicht einmal sichtbar ist. Dieser nicht beanspruchte Aspekt der vorliegenden Erfindung trägt der Tatsache Rechnung, dass moderne Fahrzeugkosolen über sehr wenige Einbauschächte verfügen. Insbesondere ist gemäß einer weiteren, nicht beanspruchten Ausführungsform vorgesehen, die Aufnahmevorrichtung 18 einschließlich Schwenkvorrichtung, Drucker, Papierrolle und Taxameter-Vorrichtung so auszugestalten, dass der Einbau in einem standardmäßig vorgesehenen Aschenbecherschacht vorgenommen wird, aufbauend auf der Erkenntnis, dass die Aschenbecher in Taxis ohnehin nicht gebraucht werden.

## Patentansprüche

1. Taxametersystem bestehend aus:
einer Taxameter-Aufnahmevorrichtung und einer Taxameter-Vorrichtung mit Bildschirmanzeige,
wobei die Taxameter-Aufnahmevorrichtung eine Befestigungseinrichtung aufweist zum lösbaren Befestigen der Taxameter-Aufnahmevorrichtung an einer Fahrzeugkonsole und weiterhin eine Aufnahmeöffnung aufweist, die mit einem Aufnahmevorsprung der Taxameter-Vorrichtung so korrespondiert, dass die Taxameter-Vorrichtung durch Einstecken des Aufnahmevorsprungs in die Aufnahmeöffnung lösbar in mindestens einer waagerechten als auch einer horizontalen Ausrichtung befestigbar ist,
und wobei die Taxameter-Vorrichtung ein Steuermodul aufweist, durch das die Bildschirmanzeige der Taxameter-Vorrichtung von einer ersten Darstellungsart in eine um 90° gedrehte Darstellungsart umgeschaltet werden kann, derart, dass unabhängig von der Befestigung der Taxameter-Vorrichtung an der Taxameter-Aufnahmevorrichtung entsprechend waagerechter oder horizontaler Ausrichtung stets eine Darstellungsart der Bildschirmanzeige wählbar ist, die für den Betrachter in korrekter Weise ablesbar ist.

2. Taxameter-System nach Anspruch 1, **dadurch gekennzeichnet, dass** das Steuermodul eine Sensoreinrichtung aufweist, die den vertikalen oder horizontalen Einbau der Taxameter-Vorrichtung erkennt und die Darstellungsart automatisch korrekt einstellt.

3. Taxameter-System nach Anspruch 1 oder 2, **dadurch gekennzeichnet, dass** die Taxameter-Vorrichtung eine Gelenkvorrichtung aufweist, um die die Taxameter-Vorrichtung noch nach der Befestigung an der Taxameter-Aufnahmevorrichtung von einer horizontalen Ausrichtung in eine vertikale Ausrichtung geschwenkt werden kann.

4. Taxameter-System nach einem der vorigen Ansprüche, **dadurch gekennzeichnet, dass** die Taxameter-Vorrichtung ein Drehgelenk aufweist, um das die Taxameter-Vorrichtung nach Befestigung an der Taxameter-Aufnahmevorrichtung und Auswahl der horizontalen oder vertikalen Ausrichtung zur besseren Einsehbarkeit gedreht werden kann.

5. Taxameter-System nach einem der vorigen Ansprüche, **dadurch gekennzeichnet, dass** die Taxameter-Vorrichtung ein Schwenkgetenk aufweist, um das die Taxameter-Vorrichtung nach Befestigung an der Taxameter-Aufnahmevorrichtung und Auswahl der horizontalen oder vertikalen Ausrichtung zur besseren Einsehbarkeit geschwenkt werden kann.

6. Taxameter-System nach einem der vorigen Ansprüche, **dadurch gekennzeichnet, dass** die Taxameter-Aufnahmevorrichtung eine Rastvorrichtung aufweist, mit der die Taxameter-Aufnahmevorrichtung an der Fahrzeugkonsole befestigbar ist.

7. Taxameter-System nach Anspruch 6, wobei die Rastvorrichtung aus einem Rastvorsprung und einer Rastnase besteht, derart, dass der Rastvorsprung in die Lüftungsschlitze der Konsole einführbar ist und mittels der Rastnase darin eingerastet werden kann.

8. Taxameter-System nach einem der Ansprüche 1 bis 7, **dadurch gekennzeichnet, dass** die Taxameter-Vorrichtung ein Druckermodul aufweist, über das ein Ausdrucken von Fahrdaten über eine Papierrolle ermöglicht wird.

9. Taxameter-System nach einem der Ansprüche 1 bis 8, **dadurch gekennzeichnet, dass** die Taxameter-Vorrichtung auf ihrer Rückseite einen Halterahmen aufweist, in den die Papierrolle drehbar eingesetzt ist.

## Claims

1. Taximeter system consisting of:
a taximeter-holding device and a taximeter device with a screen display,
wherein the taximeter-holding device has a fastening arrangement for detachably fastening said taximeter-holding device to a vehicle console, and also has a holding aperture which corresponds with a holding projection on the taximeter device in such a way that said taximeter device can be detachably fastened in at least one horizontal orientation and one horizontal orientation by slipping the holding projection into the holding aperture,
and wherein the taximeter device has a control module by which the screen display of said taximeter device can be switched over from a first display mode to a display mode which is rotated by 90°, in such a way that it is always possible, irrespective of whether the taximeter device is fastened to the taximeter-holding device according to a horizontal orientation or a horizontal orientation, to select a display mode for the screen display that can be read in the correct manner by the person viewing it.

2. Taximeter system according to claim 1, **characterised in that** the control module has a sensor arrangement which detects the vertical or horizontal installation of the taximeter device and automatically sets the display mode in the correct manner.

3. Taximeter system according to claim 1 or 2, **characterised in that** the taximeter device has an articulation device about which said taximeter device can still be swivelled, after it has been fastened to the taximeter-holding device, from a horizontal orientation into a vertical orientation.

4. Taximeter system according to one of the previous claims, **characterised in that** the taximeter device has a rotary joint about which said taximeter device can be rotated, after it has been fastened to the taximeter-holding device and the horizontal or vertical orientation has been selected, for better visibility.

5. Taximeter system according to one of the previous claims, **characterised in that** the taximeter device has a swivel joint about which said taximeter device can be swivelled, after it has been fastened to the taximeter-holding device and the horizontal or vertical orientation has been selected, for better visibility.

6. Taximeter system according to one of the previous claims, **characterised in that** the taximeter-holding device has a latching device by means of which said taximeter-holding device can be fastened to the vehicle console.

7. Taximeter system according to claim 6, wherein the latching device consists of a latching projection and a latching nose, in such a way that said latching projection can be introduced into the ventilation slits in the console and can be latched into them by means of the latching nose.

8. Taximeter system according to one of claims 1 to 7, **characterised in that** the taximeter device has a printer module via which it is possible to print out travel data via a roll of paper.

9. Taximeter system according to one of claims 1 to 8, **characterised in that** the taximeter device has, on its rear side, a holding frame in which the roll of paper is inserted in a rotatable manner.

## Revendications

1. Système de taximètre composé :
d'un dispositif de réception de taximètre et d'un dispositif de taximètre avec un affichage à écran,
étant précisé que le dispositif de réception de taximètre comporte un mécanisme de fixation pour sa fixation amovible à une console de véhicule, ainsi qu'une ouverture de réception qui correspond à une saillie de réception du dispositif de taximètre de telle sorte que ce dernier puisse être fixé de manière amovible avec au moins une orientation verticale et une orientation horizontale grâce à l'introduction de ladite saillie dans l'ouverture de réception,
et que le dispositif de taximètre comporte un module de commande grâce auquel l'affichage à écran du dispositif de taximètre peut passer d'un premier mode de visualisation à un mode de visualisation tourné de 90°, de telle sorte qu'on puisse toujours choisir, indépendamment de la fixation du dispositif de taximètre au dispositif de réception de taximètre suivant l'orientation verticale ou horizontale, un mode de visualisation de l'affichage à écran qui soit lisible correctement pour l'observateur.

2. Système de taximètre selon la revendication 1, **caractérisé en ce que** le module de commande comporte un dispositif capteur qui détecte le montage vertical ou horizontal du dispositif de taximètre et qui règle correctement, automatiquement, le mode de visualisation.

3. Système de taximètre selon la revendication 1 ou 2, **caractérisé en ce que** le dispositif de taximètre comporte un dispositif articulé sur lequel il peut pivoter, même une fois fixé au dispositif de réception de taximètre, pour passer d'une orientation horizontale à une orientation verticale.

4. Système de taximètre selon l'une des revendications précédentes, **caractérisé en ce que** le dispositif de taximètre comporte une articulation rotative sur laquelle il peut tourner, une fois fixé au dispositif de réception de taximètre et après la sélection de l'orientation horizontale ou verticale, pour une meilleure visibilité.

5. Système de taximètre selon l'une des revendications précédentes, **caractérisé en ce que** le dispositif de taximètre comporte une articulation pivotante sur laquelle il peut pivoter, une fois fixé au dispositif de réception de taximètre et après la sélection de l'orientation horizontale ou verticale, pour une meilleure visibilité.

6. Système de taximètre selon l'une des revendications précédentes, **caractérisé en ce que** le dispositif de réception de taximètre comporte un dispositif d'encliquetage grâce auquel il peut être fixé à la console de véhicule.

7. Système de taximètre selon la revendication 6, étant précisé que le dispositif d'encliquetage se compose d'une saillie d'encliquetage et d'un ergot d'encliquetage, de telle sorte que ladite saillie puisse être introduite dans les fentes d'aération de la console et puisse être enclenchée dans celles-ci à l'aide de l'ergot.

8. Système de taximètre selon l'une des revendications 1 à 7, **caractérisé en ce que** le dispositif de taximètre comporte un module d'impression grâce auquel l'impression de données de route sur un rouleau de papier est possible.

9. Système de taximètre selon l'une des revendications 1 à 8, **caractérisé en ce que** le dispositif de taximètre comporte sur son côté arrière un cadre de fixation dans lequel le rouleau de papier est placé de manière à pouvoir tourner.
